Europäisches Patentamt

European Patent Office

Office européen des brevets

(11) Veröffentlichungsnummer: **0 129 057**
**A1**

## (12) EUROPÄISCHE PATENTANMELDUNG

(21) Anmeldenummer: **84105490.1**

(22) Anmeldetag: **15.05.84**

(51) Int. Cl.³: **C 04 B 13/20**
**E 04 C 5/01**

(30) Priorität: **17.05.83 DE 3317817**

(43) Veröffentlichungstag der Anmeldung:
**27.12.84 Patentblatt 84/52**

(84) Benannte Vertragsstaaten:
**AT BE CH DE FR GB IT LI LU NL SE**

(71) Anmelder: **Lechler Chemie GmbH**
**Kornwestheimer Strasse 107 Postfach 400 560**
**D-7000 Stuttgart 40(DE)**

(72) Erfinder: **Öchsner, Waldemar, Dr. Dipl.-Chem**
**Königsallee 80**
**D-7140 Ludwigsburg(DE)**

(72) Erfinder: **Stöckl, Franz**
**Im Hummerholz 49**
**D-7057 Leutenbach-2(DE)**

(72) Erfinder: **Riedlinger, Karl, Dr. Dipl.-Chem.**
**Oskar-Schwenk-Strasse 14**
**D-7035 Waldenbuch(DE)**

(74) Vertreter: **Patentanwälte Dr. Ing. Eugen Maier Dr. Ing.**
**Eckhard Wolf**
**Pischekstrasse 19**
**D-7000 Stuttgart 1(DE)**

(54) **Korrosionsschutzmittel.**

(57) Bei auf Stahloberflächen zur Verhinderung der Rostbildung aufgebrachten Zementschlämmen sowie bei Stahlbetonkonstruktionen läßt sich bei Verwendung des üblichen, Gips enthaltenden Zements ein zuverlässiger Korrosionsschutz auf lange Dauer nicht erreichen. Ein Verzicht auf die Zumahlung von Gips ist jedoch mit dem Nachteil eines zu rasch erfolgenden Abbindens des Zements verbunden.

Zur Vermeidung dieser Nachteile, ohne die korrosive Wirkung des Gipses in Kauf nehmen zu müssen, wird gemäß der Erfindung ein gipsfreien Zement enthaltendes Rostschutzmittel vorgeschlagen, dem Phosphat und/oder zuckerartige Substanzen und/oder Celluloseäther und/oder Polyäthylenglykole und/oder Oxycarbonsäuren und/oder Salze von Oxycarbonsäuren und/oder Silicofluoride und/oder Salze von Silicofluoriden als Verzögerer zugesetzt werden.

EP 0 129 057 A1

Beschreibung

Es ist bekannt, um die Rostbildung an Stahloberflächen zu verhindern, diese mit einer Zementschlämme zu überziehen. Die Rostschutzwirkung des Zements beruht auf der bei der Hydratation erfolgenden Abspaltung von Calciumhydroxid, das einen hohen pH-Wert von 12 und mehr im Inneren des Zementsteins verursacht. Während der Abspaltung von Calciumhydroxid wird außerdem der leicht lösliche Gips in dem sich bildenden Ettringit gebunden und damit die korrosive Wirkung von Gips unterbunden. Durch die Einwirkung der Luftkohlensäure wird das die Rostbildung verhindernde Calciumhydroxid jedoch in Calciumcarbonat umgesetzt, wobei der pH-Wert sinkt und die Rostschutzwirkung dadurch aufgehoben wird, daß der zuvor als Ettringit gebundene Gips freigesetzt wird und durch die stimulierende Wirkung der Sulfationen die Stahlkorrosion um einen beträchtlichen Faktor verstärkt wird.

Um die Dauer der Rostschutzwirkung des Zementsteins zu steigern, ist gemäß der Lehre der DE-PS 1 945 040 vorgeschlagen worden, als Überzug von Stahlteilen grob gemahlenes Zementklinkermehl ohne Gipszusatz oder auch eine Mischung aus einem Mehl üblicher Zementfeinheit und einem Mehl, das überwiegend aus einer Kornfraktion zwischen 40 und 100 $\mu$m besteht, unter Zusatz lösungsmittelhaltiger organischer Bindemittel zu verwenden, um auf diese Weise Korrosionsschutzschichten herzustellen.

Die Verwendung eines solchen Zements ohne Gipszusatz in wässrigen Aufschlämmung setzt jedoch infolge seiner raschen Erstarrung eine rasche Verarbeitung voraus, die bei der Aufbereitung von Beton und dessen Einbringung in die Schalung meist nicht möglich ist. Auch muß bei der Verwendung eines solchen Zements auf Zusatzstoffe, die nur in wässriger Phase wirksam sind, verzichtet werden.

Der Erfindung liegt daher die Aufgabe zugrunde, zur dauerhaften Rostverhütung einen Zement zu verwenden, der trotz des Verzichtes auf den Zusatz von Gips eine Verlangsamung de Abbindens ermöglicht, die mittels in der wässrigen Aufschlämmung wirksamer Verzögerer erreicht wird. Dieser Zement setzt im carbonatisierten Bereich keine korrosiv wirkenden Stoffe frei, wie dies bei Zumahlung von Gips der Fall ist. Dieser Zement besitzt ebenso wie gipshaltiger Zement die Eigenschaft, aus der Umgebung stammende oder am Stahluntergrund vorhandene Fluoride und Sulfate durch chemische Umsetzung zu binden.

Diese Aufgabe wird gemäß der Erfindung durch die Verwendung von Zement ohne Zumahlung von Gips in wässriger Aufschlämmung erreicht, der Verzögerer auf der Basis der im Kennzeichen des Anspruchs 1 angegebenen Stoffe enthält.

Zur Erzielung eines im carbonatisierten Bereich nicht korrosiven Baustoffs mit ausreichend niedrigem Wasserzementwert und hoher Dichtigkeit werden dem Zement in der wässrigen Aufschlämmung vorteilhafterweise die im Anspruch 2 angegebenen Stoffe zugesetzt.

Zur Erzielung einer verbesserten Haftung der Korrosionsschutzschichten auf Stahl und/oder zementösem Untergrund werden dem Zement vorteilhafterweise die im Anspruch 3 angegebenen Stoffe zugesetzt.

Der Zement enthält vorteilhafterweise auch weitere Zusatzstoffe, wie sie in den Ansprüchen 4 und 5 angegeben sind.

Die Zusammensetzung des erfindungsgemäß verwendeten Zements eignet sich besonders auch für die Herstellung von den Umwelteinflüssen ausgesetzten Stahlbetonkonstruktionen, bei denen die Verwendung üblichen Zements im Laufe des fortschreitenden Carbonatisierungsprozesses zum Freisetzen von zuvor als Ettringit gebundenem Gips und damit zu Rostbildung führt.

Beispiel 1

100 Gewichtsteile eines auf Zementfeinheit gebrachten Zementes ohne Gipszumahlung werden mit 1 Gewichtsteil Natriumtripolyphosphat und 0,1 Gewichtsteilen eines Celluloseäthers vermischt und mit 40 bis 50 Gewichtsteilen Wasser zu einem breiigen und verarbeitungsgerechten Material eingestellt.

Beispiel 2

Auf 100 Gewichtsteile eines Zementes ohne Gipszumahlung werden 100 Gewichtsteile Quarzmehl in einer Körnung bis 300 $\mu$m, 1 Gewichtsteil Natriumhexametaphosphat, 0,1 - 0,2 Gewichtsteile Celluloseäther, 0,3 Gewichtsteile 50%- iges, wässriges Natriumligninsulfonat und ca. 50 Gewichtsteile Wasser zugefügt und zu einer gut verarbeitbaren, pastösen Beschichtungsmasse eingestellt.

## Beispiel 3

Auf eine Vormischung aus 100 Gewichtsteilen eines Zementes ohne Gipszumahlung, 50 Gewichtsteilen Trassmehl, 50 Gewichtsteilen Quarzmehl der Körnung bis 100 $\mu$m, 3 Gewichtsteilen Natriumhexamethaphosphat, 0,3 Gewichtsteilen 50%-iges, wässrigem Natriumligninsulfonat und 0,2 Gewichtsteilen Celluloseäther werden 50 Gewichtsteile einer zementstabilen 50%igen Acryl-Dispersion gegeben und ca. 20 - 30 Gewichtsteile Wasser zur Einstellung einer verarbeitungsgerechten Konsistenz gegeben. Man erhält ein Korrosionsschutzmittel mit guter Haftung auf Stahl und zementösen Untergründen.

## Beispiel 4

400 kg eines Zementes ohne Gipszumahlung werden mit 12 kg Natriumhexametaphosphat innig vermischt, mit 1600 kg Betonzuschlag der Körnung 0 - 16 mm versetzt. Mit ca. 200 kg Wasser wird ein Beton mit gut verarbeitbarer Konsistenz erhalten.

Korrosionsschutzmittel

Patentansprüche

1. Zement ohne Gipszusatz enthaltendes Korrosionsschutzmittel als Überzug von Stahloberflächen und als Baustoff für Stahlbeton, d a d u r c h   g e -
   k e n n z e i c h n e t ,   daß es Phosphat und/oder
   zuckerartige Substanzen und/oder Celluloseäther und/
   oder Polyäthylenglykole und/oder Oxycarbonsäuren
   und/oder Salze von Oxycarbonsäuren und/oder Silicofluoride und/oder Salze von Silicofluoriden enthält.

2. Korrosionsschutzmittel nach Anspruch 1, d a d u r c h g e k e n n z e i c h n e t , daß es Verflüssiger, beispielsweise Ligninsulfonate und/oder Salze von sulfonierten Melamin- bzw. Naphthalin-Formaldehyd-Kondensaten enthält.

3. Korrosionsschutzmittel nach Anspruch 1 oder 2, d a - d u r c h g e k e n n z e i c h n e t , daß es wässrige Dispersionen von weitgehend schwerverseifbaren Kunststoffen enthält, die ihrerseits Füllstoffe, Pigmente und/oder wasserrückhaltende Zusätze und/oder Stellmittel enthält.

4. Korrosionsschutzmittel nach einem der Ansprüche 1 bis 3, d a d u r c h g e k e n n z e i c h n e t , daß es Bindemittel, insbesondere auf der Basis von wässrigen unverseifbaren bituminösen Emulsionen und/ oder Kunststoffen allein oder Kunststoffen in Mischung mit Pigmenten und Füllstoffen enthält.

5. Korrosionsschutzmittel nach einem der Ansprüche 1 bis 4 g e k e n n z e i c h n e t d u r c h die Kombination mit in Wasser emulgierten Epoxidharzen allein oder in Mischung mit Pigmenten und Füllstoffen.

6. Korrosionsschutzmittel nach einem der Ansprüche 1 bis 5 g e k e n n z e i c h n e t d u r c h die Kombination mit Betonzuschlägen, deren Zementgehalt 200 bis 600 Kg/m³ beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl³) |
|---|---|---|---|
| X | CH-A- 348 096 (R.M. BERTHIER) <br> * Anspruch I; Seite 1, Zeilen 53-59 * | 1 | C 04 B 13/20 <br> E 04 C 5/01 |
| | --- | | |
| X | GB-A- 829 051 (INTERNATIONELLA SIPOREX AB) <br> * Ansprüche 1, 10 * | 1 | |
| A | * Ansprüche 1, 2, 5 * | 4 | |
| | --- | | |
| X | DE-A-2 357 506 (INTERNATIONELLA SIPOREX AB) <br> * Ansprüche 1, 2 * | 1 | |
| | --- | | |
| X | DE-B-1 621 443 (BAUAKADEMIE DER DDR) <br> * Anspruch * | 1 | RECHERCHIERTE SACHGEBIETE (Int Cl³) |
| A | * Anspruch * | 3-5 | C 04 B 13/00 <br> C 04 B 29/04 <br> E 04 C 5/01 |
| | --- | | |
| X | DE-B-1 965 375 (CERESIT-WERK GMBH) <br> * Ansprüche 1, 2; Spalte 1, Zeilen 40-47 * | 1 | |
| | --- | | |
| X | DE-B-1 771 509 (BAUAKADEMIE DER DDR) <br> * Anspruch * | 1 | |
| | ---     -/- | | |

Der vorliegende Recherchenbericht wurde für alle Patentansprüche erstellt.

| Recherchenort | Abschlußdatum der Recherche | Prüfer |
|---|---|---|
| BERLIN | 17-08-1984 | STROUD J.G. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | * Anspruch; Beispiel * <br> --- | 3-5 | |
| A | US-A-3 087 825 (F.W. MEIER-GROLMAN) <br> * Anspruch 1; Beispiele * <br> --- | 1 | |
| A | DD-A- 159 424 (BAUAKADEMIE DER DDR) <br> * Anspruch 1; Seite 2, Zeilen 33-35 * <br> --- <br> ----- | 1 | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| BERLIN | 17-08-1984 | STROUD J.G. |